# EUROPÄISCHE PATENTSCHRIFT

(11) **EP 2 291 836 B1**
(45) Veröffentlichungstag und Bekanntmachung des Hinweises auf die Patenterteilung: **12.09.2018**
(21) Anmeldenummer: 09749582.4
(22) Anmeldetag: 14.05.2009
(51) Int. Cl.: G08G 1/16, B60T 7/12

(54) **FAHRERASSISTENZSYSTEM ZUR VERMEIDUNG VON KOLLISIONEN EINES FAHRZEUGS MIT FUSSGÄNGERN**
DRIVER ASSISTANCE SYSTEM FOR PREVENTING A VEHICLE COLLIDING WITH PEDESTRIANS
SYSTÈME D'AIDE À LA CONDUITE DESTINÉ À ÉVITER DES COLLISIONS ENTRE UN VÉHICULE MOTORISÉ ET DES PIÉTONS

(30) Priorität: 21.05.2008 DE 102008024707; 01.09.2008 EP 08015394
(43) Veröffentlichungstag der Anmeldung: 09.03.2011
(73) Patentinhaber: ADC Automotive Distance Control Systems GmbH, 88131 Lindau (DE)
(72) Erfinder: HEGEMANN, Stefan, 88239 Wangen (DE); YODA, Akitsugu, 88131 Lindau (DE); ADOMAT, Rolf, 88097 Eriskirch (DE); DARMS, Michael, 88131 Lindau (DE); PONGSATHORN, Raksincharoensak, Tokyo 184-0003 (JP); NAGAI, Masao, Tokyo 167-0051 (JP); SHIMIZU, Ikuko, Tokyo 160-0023 (JP)
(74) Vertreter: Büchner, Jörg
(86) Internationale Anmeldenummer: PCT/EP2009/003427
(87) Internationale Veröffentlichungsnummer: WO 2009/141092

(56) Entgegenhaltungen:
- EP-A- 1 095 832
- EP-A- 1 494 194
- WO-A-02/13162

## Beschreibung

Die Erfindung betrifft ein Fahrerassistenzsystem, das hilft Kollisionen eines Fahrzeugs mit Fußgängern zu vermeiden und findet z. B. Anwendung in Kraftfahrzeugen.

Statistisch gesehen sind über 30% aller Verkehrstoten sowohl in Japan als auch in Deutschland Fußgänger. Es ist statistisch belegt, dass ein hohes Unfallrisiko für Fußgänger innerhalb von Ortschaften besteht.

Im Stand der Technik sind Fahrerassistenzsysteme bekannt, die eine Kollision eines Kraftfahrzeugs mit Fußgängern verhindern oder zumindest die Unfallfolgen für den Fußgänger mildern.

Bekannte Ansätze schließen auf die Gegenwart eines Fußgängers direkt durch das Erkennen von Merkmalen, die einen Fußgänger betreffen. Beispielsweise werden Fußgänger direkt im Bild oder in der Bilderfolge eines Kamerasensors und/oder eines Radarsensors klassifiziert. Diese Fahrerassistenzsysteme basieren z. B. auf einer Erkennung des Fußgängers mit einem Videobildkamerasystem. Zur Erkennung eines Fußgängers aus Bilddaten ist jedoch eine hohe Rechenleistung erforderlich.

Die EP 1 095 832 offenbart beispielweise ein System zur Vermeidung von Kollisionen zwischen einem Fahrzeug und einem Fußgänger, der sich mit einer bestimmten Geschwindigkeit auf einem Fußgängerüberweg bewegt, bei dem eine Warnung an den Fahrer ausgegeben wird, um eine potenzielle Kollision zu verhindern. Die Detektion eines Fußgängers auf einem Fußgängerüberweg erfolgt dabei mittels straßenseitiger Einrichtungen.

Ein weiteres System zur Vermeidung von Kollisionen zwischen einem Fahrzeug und einem Fußgänger ist aus der EP 1 494 194 A2 bekannt. Das System umfasst eine Kamera und/oder einen Strahlsensor sowie ebenfalls straßenseitige Einrichtungen zur Detektion von Fußgängern.

Alternativ kann zur Fußgängererkennung eine Wärmebildkamera eingesetzt werden. Nachteilig an dieser Lösung ist jedoch, dass eine Wärmebildkamera sehr teuer ist.

Viele der Unfälle mit Fußgängern treten an Stellen auf, an denen starke Merkmale in der Umgebung existieren, die helfen, auf die mögliche Gegenwart von Fußgängern zu schließen. Typische Beispiele umfassen Fußgängerüberwege bzw. Zebrastreifen.

Die DE 10341743 A1 zeigt eine Vorrichtung zur Detektion einer Annäherung an einen Fußgängerüberweg in einem Fahrzeug, wobei die Vorrichtung ein Signal erzeugt, das die Annäherung kennzeichnet. Die Annäherung an den Fußgängerüberweg kann hierbei mit einer Ortungsvorrichtung (z. B. GPS) oder einer Umfeldsensorik (z. B. Videosensorik) erkannt werden.
Es ist die Aufgabe der hier vorgestellten Erfindung ein kostengünstiges Fahrerassistenzsystem zur Vermeidung von Kollisionen mit Fußgängern mit erhöhter Zuverlässigkeit gegenüber den aus dem Stand der Technik bekannten Lösungen anzugeben.

Diese Aufgabe ist erfindungsgemäß gelöst durch ein Fahrerassistenzsystem gemäß dem unabhängigen Patentanspruch 1. Vorteilhafte Weiterbildungen sind den Unteransprüchen zu entnehmen.

Die hier beschriebene Erfindung geht einen Schritt weiter und verwendet auch Merkmale, die üblicherweise in der Nähe von Fußgängern gefunden werden, um indirekt auf die Gegenwart eines Fußgängers zu schließen. Diese Merkmale sind im Allgemeinen klar bestimmt und aus rechnerischer Sicht einfacher zu detektieren. Der Begriff Fußgänger umfasst im Rahmen dieser Erfindung auch Rollstuhlfahrer, Radfahrer usw.

Ein Objekt, das sich mit einer bestimmten Geschwindigkeit auf oder in der Nähe von einem Fußgängerüberweg bzw. Zebrastreifen bewegt, wird mit einer Wahrscheinlichkeit als Fußgänger interpretiert, die hoch genug ist, um eine Warnung an den Fahrer auszugeben und dadurch eine potentielle Kollision verhindern. Der Zebrastreifen ist klar definiert durch die Verkehrsregeln des entsprechenden Landes. Die Bewegung kann beispielsweise mit robusten Ansätzen wie Strahlsensoren oder "optischem Fluss"-Verfahren detektiert werden.

Die Erfindung sieht ein Fußgängerkollisionswarnsystem vor, bei dem die Information über die Gegenwart eines Fußgängers basiert auf den Informationen, die von einem Fahrzeugkamerasensor, einem Fahrzeugstrahlsensor, z.B. einem Millimeterwellenradar, einem Fahrzeugnavigationsgerät und/oder einer einer Fahrzeugempfangseinheit für Car-to-Car-Kommunikation ermittelt werden. Die Position und die Geschwindigkeit eines Objekts werden erfindungsgemäß mittels des Fahrzeugkamerasensors und/oder des Fahrzeugstrahlsensors detektiert.
Das Konzept des Systems besteht darin, dass alle Objekte, die sich auf oder in der Nähe von einem Zebrastreifen bewegen als Fußgänger interpretiert werden. Z. B. ist der Bildverarbeitungsalgorithmus zur Auswertung der von der Fahrzeugkamera aufgenommenen Bilder darauf ausgelegt, das Vorhandensein eines Zebrastreifens vor dem Fahrzeug zu detektieren. Die Technik, die zur Extraktion der Merkmale im Algorithmus verwendet wird beruht beispielsweise auf dem Doppelverhältnis der Zebrastreifenkanten und der Periodizität der Zebrastreifenmarkierungen.

Gemäß einer weiteren bevorzugten Ausgestaltung der Erfindung werden die detektierte Position des Zebrastreifens und beispielsweise aus dem Millimeterradar Position und Geschwindigkeit des sich bewegenden Objekts übereinandergelagert, um daraus zu schließen, dass sich ein Fußgänger auf dem Zebrastreifen vor dem Fahrzeug befindet. Bevorzugt wird eine Warnung an den Fahrer ausgegeben, wenn die Möglichkeit einer Kollision besteht.
Die Warnung aufgrund der fusionierten Sensordaten kann zweistufig erfolgen. Wird ein voraus liegender Zebrastreifen erkannt, ist die Warnung gelb (1. Stufe). Wird ein sich bewegendes Objekt auf oder in der Nähe eines Zebrastreifens entdeckt, ist die Warnung rot (2. Stufe).

Insbesondere, aber nicht ausschließlich, wenn die hier vorgestellte Lösung mit Algorithmen zur direkten Klassifikation kombiniert wird, führt das zu einer höheren Robustheit des Gesamtsystems.

Das erlaubt in einer bevorzugten Ausführungsform schwerwiegendere Eingriffe in bestimmten Szenarien, wie beispielsweise eine automatische Notbremsung.

Weitere bevorzugte Ausführungsformen der Erfindung geben alternative Möglichkeiten zur Zebrastreifenerkennung vor. Es wird ein Fahrerassistenzsystem zum Fußgängerschutz für ein Kraftfahrzeug mit Zebrastreifenerkennungsfunktion und einer Ausgabeeinheit angegeben. Bei einer Annäherung des Fahrzeugs an einen Zebrastreifen wird die Ausgabeeinheit aktiviert und es wird eine Warnung ausgegeben. Diese Warnung kann insbesondere auch in Abhängigkeit von der Fahrzeuggeschwindigkeit ausgegeben werden. Nähert sich ein Fahrzeug zu schnell einem Zebrastreifen, wird die Ausgabeeinheit aktiviert.
In einer vorteilhaften Ausgestaltung der Erfindung wird die Geschwindigkeit des Kraftfahrzeugs automatisch reduziert, wenn diese bei Annäherung an den Zebrastreifen oberhalb eines vorgegebenen Schwellwerts liegt. Damit wird gewährleistet, dass ein Fahrzeug langsam an einen Zebrastreifen heranfährt. Insbesondere wird erst nach einer Warnung, wenn der Fahrer nicht innerhalb einer vorgegebenen Zeit reagiert, die Geschwindigkeit reduziert.
In einem vorteilhaften Ausführungsbeispiel wird die Warnung optisch oder akustisch ausgegeben, um die Aufmerksamkeit des Fahrers auf einen Zebrastreifen vor dem Fahrzeug zu lenken.

Im Folgenden werden Methoden zur Zebrastreifenerkennung beschrieben:
- Vorzugsweise wird ein Zebrastreifen von einem Kamerasystem zur Umfelderfassung im Kraftfahrzeug erkannt. Dazu wird ein geeigneter Bildverarbeitungsalgorithmus im Kamerasystem hinterlegt, der mittels Kantenselektions- oder Farberkennungs- oder Mustererkennungs- oder ähnlicher Verfahren einen Zebrastreifen vor dem Fahrzeug erkennt.
- Eine weitere vorteilhafte Ausgestaltung der Erfindung sieht eine kamerabasierte Verkehrszeichenerkennungsfunktion vor, wobei die Erkennungsfunktion ein Verkehrszeichen erkennt, das auf einen Zebrastreifen hinweist.
- Eine positive Ausgestaltung der Erfindung sieht vor, dass das Fahrzeug mit einer elektronischen Karte ausgestattet ist. Die elektronische Karte enthält die Position von Zebrastreifen, die Position des Fahrzeugs wird vorzugsweise mit einem Navigationsgerät z.B. einem GPS Empfänger bestimmt.
- Insbesondere wird die Information über einen Zebrastreifen in Fahrtrichtung von vorausfahrenden

Fahrzeugen durch Car-to-Car Kommunikation übertragen. Die genannten Methoden zur Zebrastreifenerkennung tragen einzeln oder miteinander verknüpft zur Erfindung bei. Z. B. kann die Zebrastreifenerkennung derart ausgestaltet sein, dass ein Zebrastreifen mit zwei oder mehreren der vorgestellten Methoden erkannt wird: Mittels der elektronischen Karte oder der Verkehrszeichenerkennung wird eine Region identifiziert, in der sich mit großer Wahrscheinlichkeit ein Zebrastreifen befindet. Diese Vermutung wird durch die Analyse der Bilddaten des Kamerasystems im Fahrbahnbereich vor dem Fahrzeug verifiziert bzw. verworfen.

Lösungen aus dem Stand der Technik zur Vermeidung von Kollisionen mit Fußgängern haben Schwierigkeiten, wenn z.B. eine Menschen- bzw. Fußgängermenge erkannt werden soll, da diese von den gelernten Klassifikationsmustern (Größe, Volumen, Kleidung, Taschen, Zubehör wie Fahrrädern, etc.) abweichen.
Die hier vorgestellte Lösung bietet Vorteile, da sie nicht nach derartigen Merkmalen suchen muss, sondern nach klar definierten Merkmalen wie einem Zebrastreifen sucht. Das erlaubt es dem Fahrerassistenzsystem, in weniger klaren Szenarien zu reagieren, insbesondere, wenn die vorgestellte Lösung mit bereits bekannten Algorithmen kombiniert wird.

Die Detektion der klar definierten Merkmale in der Umgebung ist weniger rechenaufwendig im Vergleich zur direkten Erkennung eines Fußgängers. Das führt zu einem kostengünstigeren System.

Gegenüber Lösungen mit nur einem (Kamera-)Sensor bietet eine erfindungsgemäße Weiterbildung mit zwei unabhängigen Sensoren einer höheren Robustheit und geringeren Fehleranfälligkeit des Fahrerassistenzsystems. Beide Sensoren können sich bewegende Objekte detektieren, wodurch eine Fußgängererkennung verifiziert werden kann.

Eine Kombination von Radardaten mit Informationen aus einer digitalen Karte oder von vorausfahrenden Fahrzeugen bietet den Vorteil, dass auch bei schlechter Sicht noch adäquate Warnungen ausgegeben werden können.

Nachfolgend wird die Erfindung anhand von Ausführungsbeispielen und Figuren erläutert.
Fig. 1 zeigt ein schematisches Diagramm eines Fußgängerkollisionswarnsystems.
Fig. 2 zeigt ein grafisches Warnsystem basierend auf den Ergebnissen der Detektion von Fußgängern.

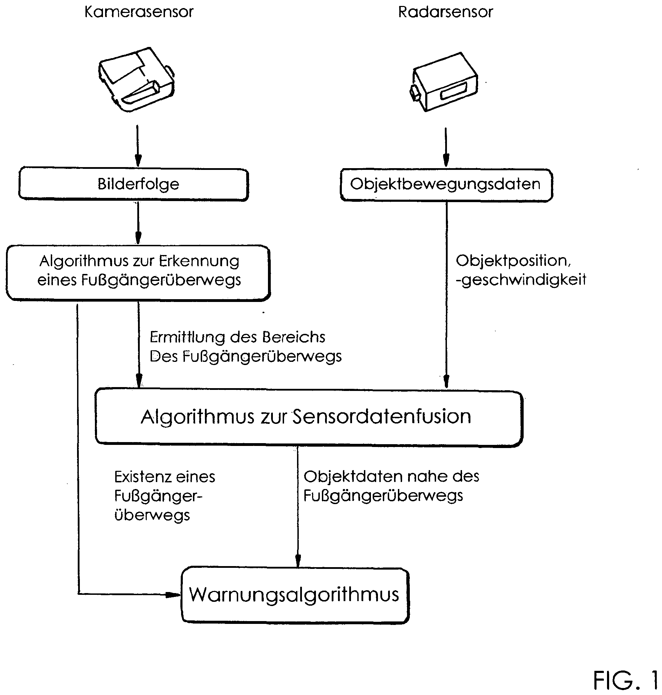

Ein Ausführungsbeispiel für die Architektur eines Fußgängerkollisionswarnsystems ist in Fig. 1 dargestellt. Ein Kamerasensor, z. B. ein CMOS- oder CCD-Sensor, nimmt eine Bilderfolge der Fahrzeugumgebung auf. Mittels eines Algorithmus werden die Bilder auf einen Fußgängerüberweg untersucht. Wird ein Fußgängerüberweg erkannt, so wird der Bereich, in dem der Fußgängerüberweg positioniert ist an einen Algorithmus zur Sensordatenfusion übermittelt und einem Warnungsalgorithmus die Existenz eines Fußgängerüberwegs mitgeteilt.

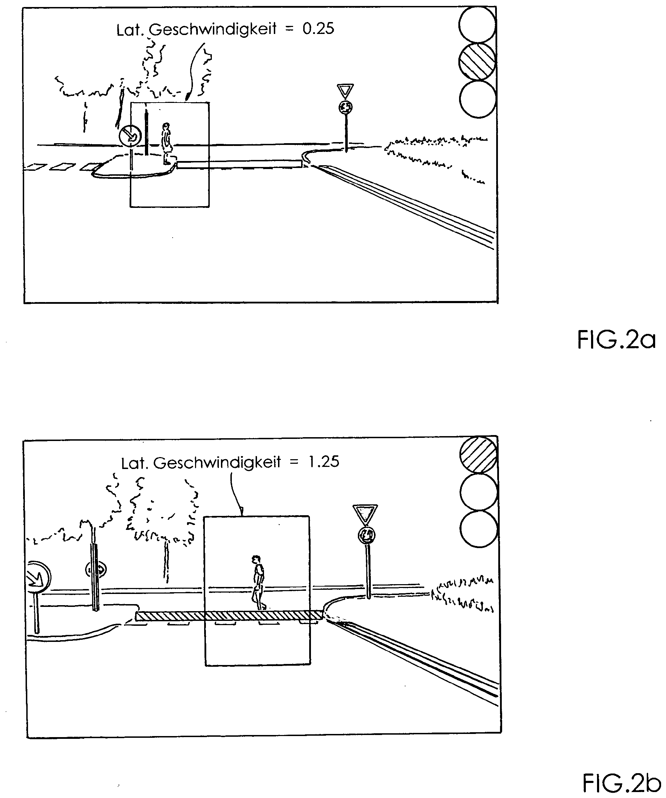

Ein Strahlsensor, wie z. B. ein Millimeterradar oder ein Lidar detektiert Objekte, die sich in der Fahrzeugumgebung bewegen. Von detektierten Objekten wird die Position und die Geschwindigkeit (inklusive Bewegungsrichtung) an den Algorithmus zur Sensordatenfusion übermittelt. Dieser Algorithmus legt nun den Bereich des detektierten Fußgängerüberwegs mit der Objektposition und -geschwindigkeit übereinander zu den "Objektdaten nahe des Fußgängerüberwegs". Diese Daten werden dem Warnungsalgorithmus übergeben. Der Warnungsalgorithmus wertet die erhaltenen Daten aus und veranlasst die Ausgabe einer Warnung an den Fahrer, wenn eine Gefahr für eine Kollision mit einem Fußgänger besteht. Die Warnung kann zweistufig erfolgen wie in Fig. 2a und 2b dargestellt ist. Eine Gefahr besteht, wenn der Sensorfusionsalgorithmus ermittelt, dass sich ein Objekt mit einer für einen Fußgänger charakteristischen Geschwindigkeit im Bereich eines Fußgängerüberwegs bewegt. Alternativ zu der dargestellten Architektur kann das Fußgängerkollisionswarnsystem mit nur einem Kamerasensor realisiert werden. Hierzu ist eine Kameradatenauswertung erforderlich, die z.B. mit einem "optischen Fluss"-Verfahren (optical flow), die Bewegung von Objekten detektieren kann. Diese Daten ersetzen dann die Daten des in Fig. 1 dargestellten Radarsensors, wodurch die Sensordatenfusion wesentlich erleichtert wird. Statt der dargestellten Verwendung einer Monokamera als Kamerasensor ist auch der Einsatz eines Stereokamerasystems möglich. Hierbei erhält man zusätzliche Daten über Objekte wie insbesondere deren Größe, was die Klassifizierung als Fußgänger erleichtert bzw. zuverlässiger macht.

Eine zweistufige visuelle Warnung ist in Fig. 2a und 2b dargestellt. Fig. 2a zeigt eine Situation, bei der ein Fußgängerüberweg erkannt wurde. Dem Fahrer wird eine erste Warnstufe, beispielsweise in Form eines gelben Warnniveaus, angezeigt. Es befindet sich zwar ein Objekt seitlich neben dem Bereich des Fußgängerüberwegs. Da dieses Objekt sich nicht bewegt, wird es jedoch nicht berücksichtigt.
Fig. 2b zeigt eine Situation, in der wiederum ein Fußgängerüberweg erkannt wurde und ein Objekt detektiert wurde, das sich auf dem Fußgängerüberweg bewegt. Dieses Objekt wird als sich bewegender Fußgänger interpretiert. Dem Fahrer wird eine zweite Warnstufe angezeigt, beispielsweise in Form eines roten Warnniveaus. Reagiert der Fahrer auf die Warnung nicht, könnte in einer solchen Situation eine automatische Notbremsung durchgeführt werden, um eine Kollision zu verhindern oder deren Folgen zu vermindern.

## Patentansprüche

1. Ein Fahrerassistenzsystem zur Vermeidung von Kollisionen eines Fahrzeugs mit Fußgängern umfassend einen Fahrzeugkamerasensor, einen Fahrzeugstrahlsensor, ein Fahrzeugnavigationsgerät mit einer digitalen Karte mit der Position mindestens eines Fußgängerüberwegs und/oder eine Fahrzeugempfangseinheit für Car-to-Car-Kommunikationsdaten und eine Auswerteeinheit, **dadurch gekennzeichnet, dass** der Fahrzeugkamerasensor, das Fahrzeugnavigationsgerät und/oder die Fahrzeugempfangseinheit dazu ausgebildet ist, einen Fußgängerüberweg zu erkennen oder die Position eines Fußgängerüberwegs bereitzustellen,
der Fahrzeugkamerasensor und/oder der Fahrzeugstrahlsensor dazu ausgebildet ist, die Position und Geschwindigkeit eines Objektes zu detektieren und
die Auswerteeinheit dazu ausgebildet ist,
wenn sich das detektierte Objekt mit einer bestimmten Geschwindigkeit auf oder in der Nähe von dem Fußgängerüberweg bewegt, dieses Objekt mit einer Wahrscheinlichkeit als Fußgänger zu interpretieren, die hoch genug ist, um eine Warnung an den Fahrer auszugeben und eine potenzielle Kollision zu verhindern.

2. Ein Fahrerassistenzsystem nach Anspruch 1, **dadurch gekennzeichnet, dass** der Fahrzeugkamerasensor den Fußgängerüberweg detektiert.

3. Ein Fahrerassistenzsystem nach Anspruch 2, **dadurch gekennzeichnet, dass** aus Fahrzeugkameradaten ein Fußgängerüberweg anhand des Doppelverhältnisses der Zebrastreifenkanten und der Periodizität der Zebrastreifenmarkierungen erkannt wird.

4. Ein Fahrerassistenzsystem nach Anspruch 2, **dadurch gekennzeichnet, dass** aus den Fahrzeugkameradaten der Fußgängerüberweg erkannt wird anhand eines Verkehrszeichens, das auf einen Fußgängerüberweg hinweist.

5. Ein Fahrerassistenzsystem nach Anspruch 2, 3 oder 4, **dadurch gekennzeichnet, dass** aus den Fahrzeugkameradaten die Position und Bewegung von Objekten mit dem Verfahren des optischen Flusses (optical flow) erkannt werden.

6. Ein Fahrerassistenzsystem nach einem der vorgenannten Ansprüche, **dadurch gekennzeichnet, dass** ein Fahrzeugstrahlsensor die Position und Bewegung des Objektes detektiert.

7. Ein Fahrerassistenzsystem nach einem der vorgenannten Ansprüche, **dadurch gekennzeichnet, dass** Daten aus der digitalen Karte des Fahrzeugnavigationsgeräts verwendet werden, um die Position des Fußgängerüberwegs zu ermitteln.

8. Ein Fahrerassistenzsystem nach einem der vorgenannten Ansprüche, **dadurch gekennzeichnet, dass** die Position eines Fußgängerüberwegs in Fahrtrichtung von vorausfahrenden Fahrzeugen durch Car-to-Car-Kommunikation an die Fahrzeugempfangseinheit übertragen wird.

9. Ein Fahrerassistenzsystem nach einem der vorgenannten Ansprüche, **dadurch gekennzeichnet, dass** die Daten aus Fahrzeugkamerasensor, Fahrzeugstrahlsensor, Fahrzeugnavigationsgerät und/oder Fahrzeugempfangseinheit übereinandergelagert werden, um zu ermitteln, ob sich ein Objekt auf oder in der Nähe eines Fußgängerüberwegs bewegt.

10. Ein Fahrerassistenzsystem nach einem der vorgenannten Ansprüche, **dadurch gekennzeichnet, dass** zusätzlich eine direkte Klassifizierung von Fußgängern aus den Fahrzeugkameradaten durchgeführt wird.

11. Ein Fahrerassistenzsystem nach einem der vorgenannten Ansprüche, **dadurch gekennzeichnet, dass** die Geschwindigkeit des Kraftfahrzeugs automatisch reduziert wird, wenn diese bei Annäherung an den Zebrastreifen oberhalb eines vorgegebenen Schwellwerts liegt.

12. Ein Fahrerassistenzsystem nach einem der vorgenannten Ansprüche, **dadurch gekennzeichnet, dass** bei Nichtreagieren des Fahrers auf eine Warnung eine Notbremsung durchgeführt wird.

## Claims

1. A driver assistance system for preventing a vehicle colliding with pedestrians, comprising a vehicle camera sensor, a vehicle beam sensor, a vehicle navigation unit having a digital map with the position of at least one pedestrian crossing and/or a vehicle receiving unit for car-to-car communication data and an evaluation unit, **characterized in that**
the vehicle camera sensor, the vehicle navigation unit and/or the vehicle receiving unit is/are configured to recognize a pedestrian crossing or to provide the position of a pedestrian crossing,
the vehicle camera sensor and/or the vehicle beam sensor is/are configured to detect the position and speed of an object, and
the evaluation unit is configured,
when the detected object is moving at a determined speed on or in the vicinity of the pedestrian crossing, to interpret said object as being a pedestrian with a probability that is sufficiently high to emit a warning to the driver and to prevent a potential collision.

2. The driver assistance system according to Claim 1, **characterized in that** the vehicle camera sensor detects the pedestrian crossing.

3. The driver assistance system according to Claim 2, **characterized in that**, from the vehicle camera data, a pedestrian crossing is recognized on the basis of the double ratio of the crosswalk edges and the periodicity of the crosswalk markings.

4. The driver assistance system according to Claim 2, **characterized in that**, from the vehicle camera data, the pedestrian crossing is detected on the basis of a road sign which indicates a pedestrian crossing.

5. The driver assistance system according to Claim 2, 3 or 4, **characterized in that**, from the vehicle camera data, the position and movement of objects are detected with the optical flow method.

6. The driver assistance system according to any one of the preceding claims, **characterized in that** a vehicle beam sensor detects the position and movement of the object.

7. The driver assistance system according to any one of the preceding claims, **characterized in that** data from the digital map of the vehicle navigation unit are used in order to establish the position of the pedestrian crossing.

8. The driver assistance system according to any one of the preceding claims, **characterized in that** the position of a pedestrian crossing in the direction of travel is transmitted from vehicles driving ahead by car-to-car communication to the vehicle receiving unit.

9. The driver assistance system according to any one of the preceding claims, **characterized in that** the data from the vehicle camera sensor, vehicle beam sensor, vehicle navigation unit and/or vehicle receiving unit are superimposed in order to establish whether an object is moving on or in the vicinity of a pedestrian crossing.

10. The driver assistance system according to any one of the preceding claims, **characterized in that** a direct classification of pedestrians is additionally performed from the vehicle camera data.

11. The driver assistance system according to any one of the preceding claims, **characterized in that** the speed of the motor vehicle is automatically reduced if this is above a predefined threshold value on approaching the crosswalk.

12. The driver assistance system according to any one of the preceding claims, **characterized in that** in the event that the driver does not react to a warning, emergency braking is performed.

## Revendications

1. Système d'aide à la conduite destiné à éviter des collisions entre un véhicule et des piétons, comprenant un capteur de caméra de véhicule, un capteur de rayonnement de véhicule, un appareil de navigation de véhicule avec une carte numérique avec la position d'au moins un passage piéton et/ou une unité de réception de véhicule pour des données de communication véhicule à véhicule et une unité d'analyse, **caractérisé en ce que**
le capteur de caméra de véhicule, l'appareil de navigation de véhicule et/ou l'unité de réception de véhicule sont formés pour détecter un passage piéton ou pour mettre à disposition la position d'un passage piéton,
le capteur de caméra de véhicule et/ou le capteur de rayonnement de véhicule sont formés pour détecter la position et la vitesse d'un objet et
l'unité d'analyse est formée pour
interpréter l'objet détecté comme piéton avec une probabilité suffisamment élevée afin d'émettre un avertissement pour le conducteur et d'empêcher une collision éventuelle, lorsque l'objet se déplace avec une certaine vitesse sur ou à proximité du passage piéton.

2. Système d'aide à la conduite selon la revendication 1, **caractérisé en ce que** le capteur de caméra de véhicule détecte le passage piéton.

3. Système d'aide à la conduite selon la revendication 2, **caractérisé en ce qu'**un passage piéton est détecté au moyen du rapport double des bords des bandes piétonnes et de la périodicité des marquages des bandes piétonnes, à partir des données de caméra de véhicule.

4. Système d'aide à la conduite selon la revendication 2, **caractérisé en ce que** le passage piéton est détecté au moins d'un panneau de signalisation indiquant un passage piéton, à partir des données de caméra de véhicule.

5. Système d'aide à la conduite selon les revendications 2, 3 ou 4, **caractérisé en ce que** la position et le mouvement d'objets sont détectés par le procédé du flux optique (optical flow), à partir des données de caméra de véhicule.

6. Système d'aide à la conduite selon l'une des revendications précédentes, **caractérisé en ce qu'**un capteur de rayonnement de véhicule détecte la position et le mouvement de l'objet.

7. Système d'aide à la conduite selon l'une des revendications précédentes, **caractérisé en ce que** des données de la carte numérique de l'appareil de navigation de véhicule sont utilisées afin de déterminer la position du passage piéton.

8. Système d'aide à la conduite selon l'une des revendications précédentes, **caractérisé en ce que** la position d'un passage piéton dans le sens du déplacement est transmise à l'unité de réception de véhicule par des véhicules précédents par communication véhicule à véhicule.

9. Système d'aide à la conduite selon l'une des revendications précédentes, **caractérisé en ce que** les données du capteur de caméra de véhicule, du capteur de rayonnement de véhicule, de l'appareil de navigation de véhicule et/ou de l'unité de réception de véhicule sont superposées afin de déterminer si un objet se déplace sur ou à proximité d'un passage piéton.

10. Système d'aide à la conduite selon l'une des revendications précédentes, **caractérisé en ce que**, en outre, un classement direct des piétons est exécuté à partir des données de caméra de véhicule.

11. Système d'aide à la conduite selon l'une des revendications précédentes, **caractérisé en ce que** la vitesse du véhicule à moteur est réduite automatiquement lorsque celle-ci est supérieure à une valeur seuil prescrite lors de l'approche des bandes piétonnes.

12. Système d'aide à la conduite selon l'une des revendications précédentes, **caractérisé en ce qu'**un freinage d'urgence est exécuté en cas de non-réaction du conducteur à un avertissement.
